# EUROPEAN PATENT APPLICATION

(11) **EP 1 940 083 A2**
(43) Date of publication of application: **02.07.2008**
(21) Application number: 07022366.4
(22) Date of filing: 19.11.2007
(51) Int. Cl.: H04L 12/437

(54) **RPR transmission route designation method and apparatus**

(30) Priority: 27.12.2006 JP 2006352622
(71) Applicant: FUJITSU LIMITED, Kawasaki-shi, Kanagawa 211-8588 (JP)
(72) Inventor: Konuma, Yoichi, Kawasaki-shi Kanagawa 211-8588 (JP); Saiki, Koichi, Kawasaki-shi Kanagawa 211-8588 (JP); Okuda, Takashi, Kawasaki-shi Kanagawa 211-8588 (JP); Kangyu, Hideki, Kawasaki-shi Kanagawa 211-8588 (JP)
(74) Representative: HOFFMANN EITLE

(57) **Abstract**

An RPR transmission route designation method and apparatus in a system including a control device connected to an RPR having communications routes in both the counterclockwise and clockwise directions and connecting a plurality of RPR stations, wherein each RPR station sets a cleave point for discarding flooded RPR frames in the case of a bidirectional communication system on a route not desired for use for communication on the RPR, floods both the counterclockwise and clockwise directions of the RPR with RPR frames to learn the MAC address at each RPR station, and transmits the received RPR frames by a communication route which the flood of RPR frames reach based on the learned results of the MAC addresses, whereby it is possible to designate RPR transmission routes supported by layer 2/3 switches, transmission devices, and the like in line with the carrier operations.

## Description

### CROSS-REFERENCE TO RELATED APPLICATIONS

This application is based upon and claims a priority of Japanese Patent Application No. 2006-352622, filed on December 27, 2006, the contents being incorporated herein by reference

### BACKGROUND OF THE INVENTION

### 1. Field of the Invention

The present invention relates to a resilient packet ring (RPR) (prescribed by IEEE 802.17) transmission route designation method and apparatus, more particularly relates to a method and apparatus designating an RPR transmission route supported by devices (layer 2/3 switches, transmission devices, and the like) provided with Ethernet® interfaces used in a broadband layer 2 network for which carriers etc. are developing services.

### 2. Description of the Related Art

Along with the higher speeds and broader bands of data communications in recent years, demand for Ethernet® services by layer 2/3 networks has been rising. Among these, particularly demand for layer 2 services has been growing as networks not conscious of higher protocols.

In the past, for constructing the layer 2 networks being used by the carriers, the general practice has been to combine L2SW and wavelength division multiplexing (WDM) or combine L2SW and add drop multiplexing (ADM).

Transmission by WDM or ADM is generally point-to-point transmission, however point-to-multipoint transmission is not possible. It uses a single wavelength or single STS path in a fixed manner, so burst traffic, a feature of the Ethernet®, could not be efficiently transmitted.

Further, in existing layer 2 networks, the protection function of L2SW is used, but the standard prescribed switching time is 40 seconds or so by the spanning tree protocol (STP, IEEE: 802.1d) and 2 seconds or so by the rapid spanning protocol (RSTP, IEEE 802.1w). The fault restoration ability was insufficient.

Consequently, layer 2 technology able to handle multipoint-to-multipoint transmission and burst traffic using the statistical multiplexing effect and having a fault restoration time of 50 msec or less equal to that of an SDH/SONET transmission device has been demanded. RPR (IEEE 802.17) has been prescribed to solve this.

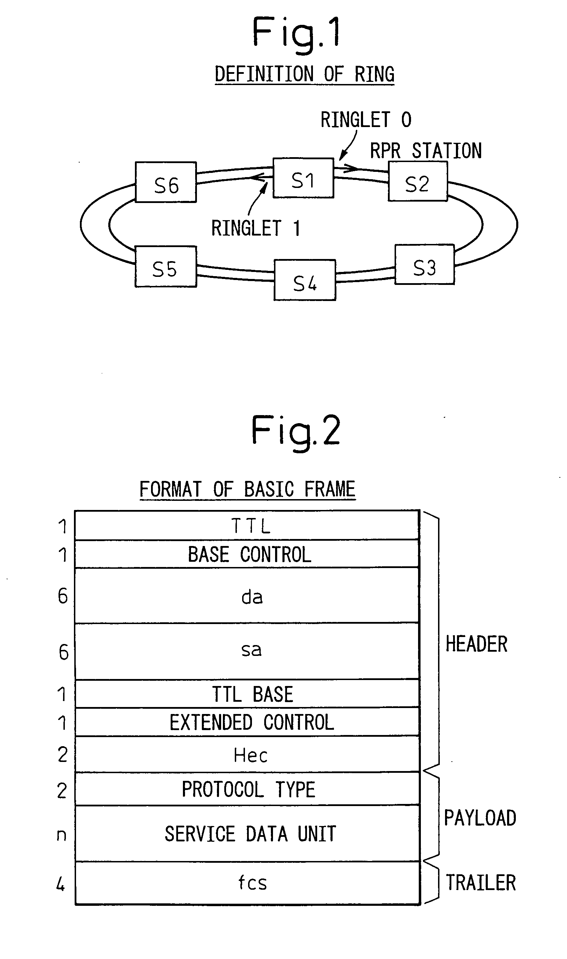

Below, the RPR will be shown in brief. FIG. 1 is a diagram showing an outline of the RPR ring structure. An RPR, as shown in FIG. 1, has both a clockwise and counterclockwise ring structure (outside and inside). Each is called a "ringlet". In the IEEE 802.17, the outside (clockwise) ringlet is defined as the "ringlet 0", and the inside ringlet (counterclockwise) is defined as the "ringlet 1". Data can be transmitted in both directions. Each RPR station transmits data by sharing the bandwidth of the ringlets.

Further, each RPR station connected to the ringlets has a station address. FIG. 2 is a diagram showing the format of a basic data frame which each RPR station transmits or receives. In FIG. 2, "TTL" is an abbreviation for "Time To Live" and shows the remaining number of RPR stations to the destination RPR station. Each time a frame transmitted from the source RPR station passes through an RPR station, the value of TTL is decreased by one. When it becomes zero, that frame is discarded.

In the region of the base control, the ringlet (0 or 1), fairness coverage (Y or N), frame type (data, control, fairness, or idle), service class (11: class A0, 10: class A1, 01: class B, 00: class C), wrapping coverage (Y or N) are defined.

"da" is the destination address, that is, the destination MAC address of the station. "sa" is the source address, that is, the source MAC address of the station.

The TTL base is the initial value of the TTL. The TTL decreases every time the frame passes an RPR station, but the TTL base value continues to show the initial value of the TTL. It is used to verify the legitimacy of a frame by being compared with the topology information.

In the extended control region, the extended frame (Y or N), flooding method (none, one direction, or both directions), strict order (strict or relaxed), etc. is defined. "Hec" (Header Error Check) is used for verifying the legitimacy of the RPR header.

FIG. 3 is a diagram showing the extended data frame format used when relaying a layer 2 Ethernet® frame. When relaying a layer 2 Ethernet® frame, the entire Ethernet® frame is mapped in the payload of the extended data frame format shown in FIG. 3.

FIG. 4 is a diagram showing the format of a control frame. In the figure, the difference from the format of the data frame shown in FIG. 2 is that instead of the payload in FIG. 2, the payload in FIG. 4 contains the control type, the control version, and the control data unit.

There are the following control types:
- 01: h...CT_STATION_ATD
- 02: h...CT_TOPO_PROT
- 03: h...CT_TOPO_CHKSUM
- 04: h...CT_ LRTT_REQ
- 05: h...CT_LRTT_RSP
- 06: h...CT_FDD
- 07: h...CT_OAM_ECHO_REQ

- 08: h...CT_OAM_ECHO_RSP

The control version is fixed to "0". The control data unit is defined for each control frame format.

An RPR station detects changes and faults of the network by maintaining a constant grasp of the ring topology. Each station on the ring broadcasts a topology and protection (TP) frame, one type of a control frame, periodically (default 10 ms) or when there is a change in the status of the station or ring.

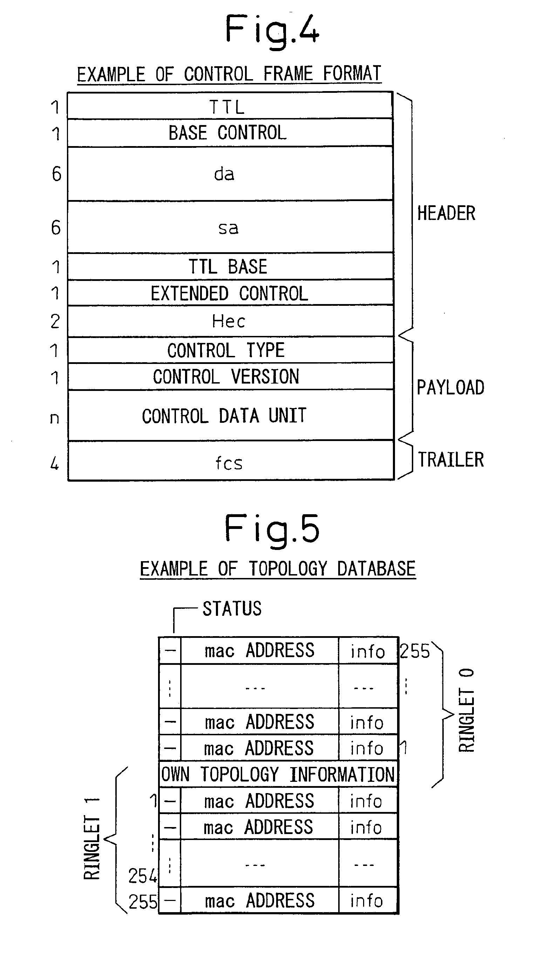

FIG. 5 is a diagram showing a topology database constructed from collected station information. Based on this topology database, the topology of the entire ring is recognized.

There are two types of transmission methods of broadcasting frames in an RPR (including the unknown unicast frames): unicast directional flooding and bi-directional flooding. With both flooding methods, a station receiving a frame discards that frame when TTL=1 and sa (source address)=home MAC address.
Unicast Directional Flooding

Frames are transmitted over only one of the ringlets. When the frames are transmitted, the TTL is set to "number of stations - 1".
Bidirectional Flooding

Frames are transmitted over both ringlets. Cleave points are set on the ringlets. The number of hops to the cleave point is set as the TTL for each ringlet. There is no rule relating to where to set a cleave point, but this is usually the most distant position from the transmitting station, that is to say, in almost all cases, (number of stations-1)/2 or number of stations/2. Further, at the time of a fault, the fault position becomes the cleave point.

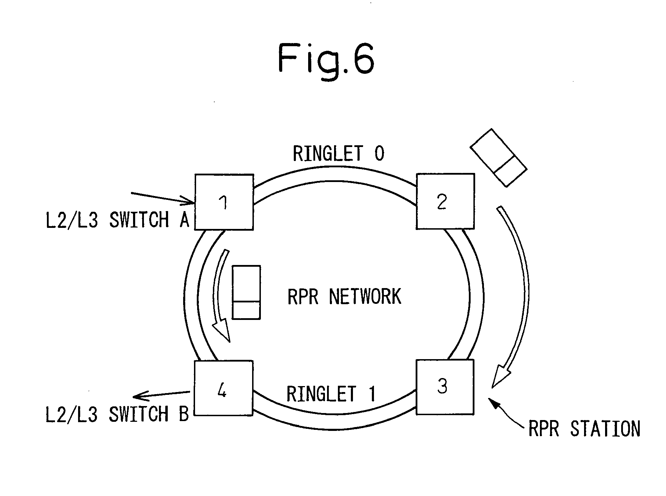

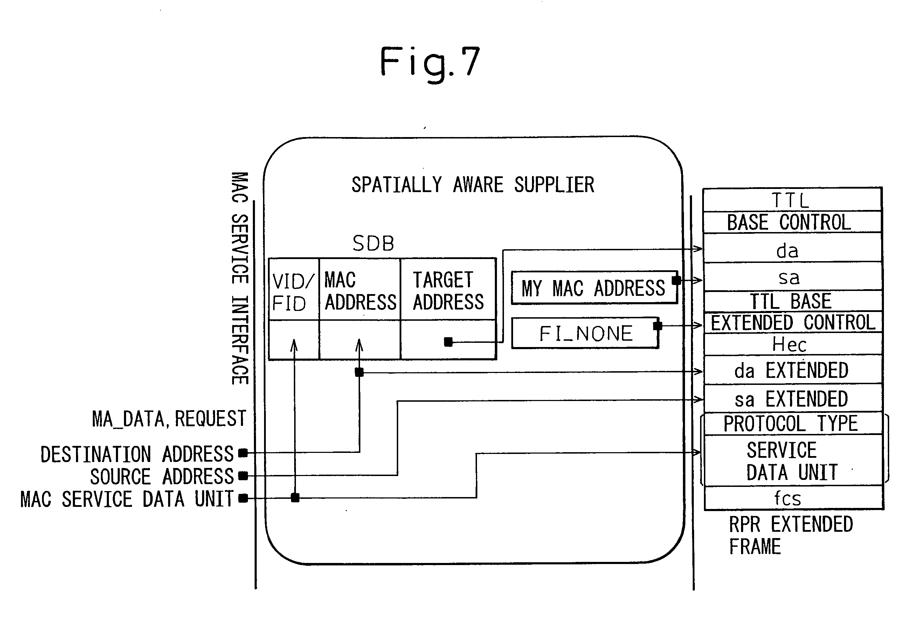

FIG. 6 is a diagram showing the format of the RPR network for briefly explaining the spatial reuse standardized in the IEEE 802.17b, while FIG. 7 is a diagram for explaining in brief this spatial reuse. As shown in FIGS. 6 and 7, when transmitting frames between RPR stations, the frames are transmitted using only one direction ringlet. At this time, the other ringlet is idle. This idle bandwidth can be used for transmission of other frames (this was outside the scope of the IEEE 802.17). Transmission is performed by linking the MAC address of the RPR station and the MAC address of the client side, but the detailed method depends on vendor implementation. With spatial reuse, the VID, client MAC address, and station addresses are learned and the results used for unicast communication.

It is possible to use the above RPR to efficiently service Ethernet® traffic, but it is impossible to designate the route for the following reasons. Because of this, it not possible to flexibly handle carrier operations/services.

The RPR stations in the ring exchange control frames with each other to construct the ring topology. When an Ethernet® frame is input from the client side to the ring, the Ethernet® frame is transmitted over the route with the smallest number of hops in line with this topology. Because of this, there are the next two problems.

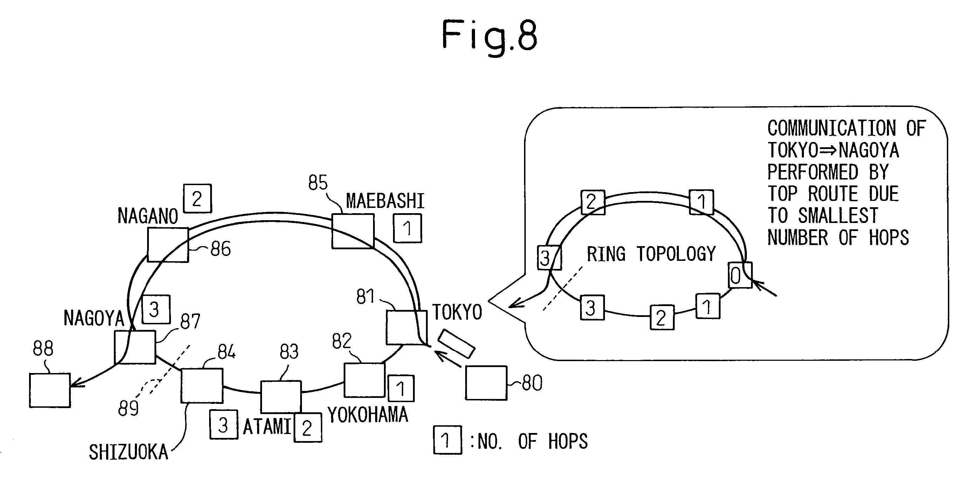

The first problem is that transmission over the route in line with the operating policy of the carrier is not possible. FIG. 8 is a view of the configuration of an RPR system for explaining this first problem. As shown in FIG. 8, for example, if the client 80 side inputs an Ethernet® frame to the ring at a Tokyo RPR station 81, the Ethernet® frame addressed to the client 88 connected to the Nagoya RPR station 87 is transmitted by the route with the smallest number of hops over the route of the Maebashi RPR station 85 and the Nagano RPR station 86. The operating policy of the carrier is to obtain a grasp of which route each end user communicates over so as to manage the traffic etc. At normal times when there are no faults, the carrier performs management and maintenance with the operating policy of managing the traffic of each end user all together over one route (in the above example, the operating policy of the Pacific side route at normal times when there are no faults).

As a result, when transmitting by the route with the smallest number of hops in line with the topology information, sometimes communication ends up proceeding over an unintended route counter to the operating policy of the carrier.

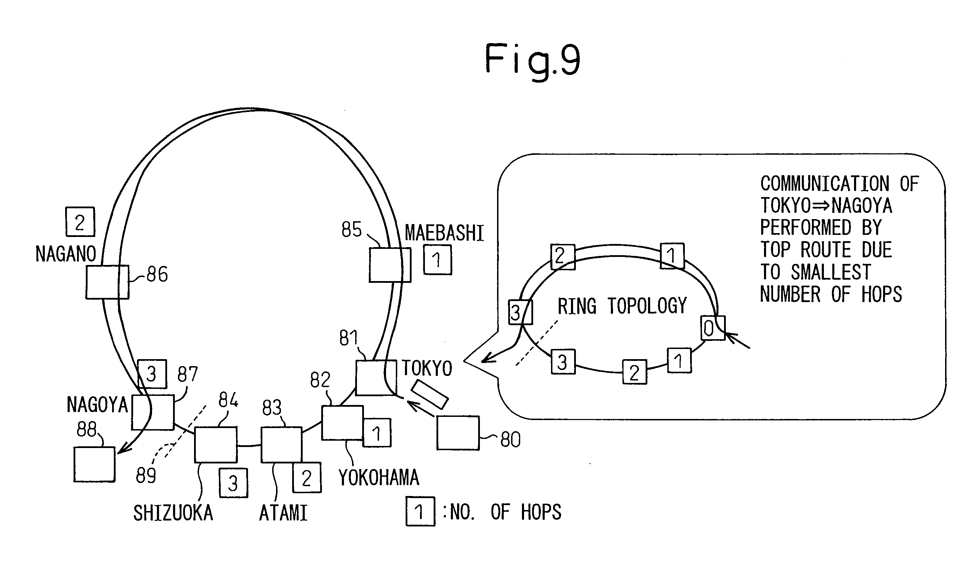

The second problem is that packet transmission over a route suited to the service of the carrier is not possible. FIG. 9 is a view of the configuration of an RPR system for explaining this second problem. As shown in FIG. 9, for example, if an Ethernet® frame is input from the client 80 side to the RPR ring at the Tokyo RPR station 81, the Ethernet® frame addressed to the client 88 connected in the Nagoya RPR station 87 is transmitted by the route with the smallest number of hops over the Maebashi and Nagano route in line with the topology information.

When transmitting over the route with the smallest number of hops in line with the topology information, even if the Maebashi and Nagano route is long in transmission distance and the delay is also large, communication ends up going over the Maebashi and Nagano route with the small number of hops. For example, when providing a low delay service of a carrier (voice or other service with strict restrictions over delay), the service level agreement (SLA) of the carrier becomes difficult to maintain.

Further, Japanese Patent Publication (A) No. 2006-262169 discloses the technology of setting a cleave point for frame processing, but this connects rings together by the method of setting the cleave point at the midpoint of the interconnected stations and the other ring and thereby switching between a plurality of rings to bypass faults and minimizing the fault range. It does not disclose technology providing a system transmitting frames over a route in line with operations of the carrier.

Similarly, Japanese Patent Publication (A) No. 2002-374279 discloses the technology of providing a MAC address solution unit at a packet switch node having a bridge function and assigning frames to the packet path corresponding to the transmission address, but this is technology using the concept of a "path label" and mapping packets at the path label based on the results of learning. It is technology not designating over which of the counterclockwise or clockwise routes to send packets from that node, not technology providing a system transmitting frames over a route in line with the operations of the carrier.

The method of designating the transmission route in a RPR is found in the above way from the viewpoint of operations of the carrier. The present invention, based on the above mentioned problems, solves the following problems when providing the Ethernet® services now being developed by carriers by various type of hardware.

Under present conditions, the RPR prescribed by the IEEE 802.17 is being used for L2 services provided by carriers, but the method of designation of the transmission route is not prescribed, so as explained above, there was the problem that a system in line with the operations of the carrier could not be provided.

### SUMMARY OF THE INVENTION

An object of the present invention to provide a system for designating a transmission route of a resilient packet ring (RPR) (prescribed in IEEE 802.1), supported by devices (layer 2/3 switches, transmission devices, and the like) provided with Ethernet® interfaces used in broadband layer 2 networks for which carriers are developing services, in line with operations of the carrier.

According to a first aspect of the present invention, there is provided a resilient packet ring (RPR) transmission route designation method in a system including a resilient packet ring connecting a plurality of RPR stations and a control device connected to the resilient packet ring and controlling the plurality of RPR stations and the resilient packet ring, the RPR transmission route designation method characterized by having a first step of having each RPR station set a cleave point for discarding flooded RPR frames in the case of a bidirectional communication system on a route not desired for use for communication on the resilient packet ring by the control device, a second step of flooding both ringlets of the resilient packet ring with RPR frames to learn the MAC address at each of the RPR stations, and a third step of transmitting received RPR frames by a communication route which the flooding of the RPR frames reaches based on the learned results of the MAC addresses. -

According to a second aspect of the present invention, there is provided a resilient packet ring (RPR) transmission route designation method in a system including a resilient packet ring connecting a plurality of RPR stations and a control device connected to the resilient packet ring and controlling the plurality of RPR stations and the resilient packet ring, the RPR transmission route designation method characterized by having a first step of having each RPR station automatically set a cleave point for discarding flooded RPR frames in the case of a bidirectional communication system on a communication route with a long delay time until each RPR station by the control device, a second step of flooding both ringlets of the resilient packet ring with RPR frames to learn the MAC address at each of the RPR stations, and a third step of transmitting received RPR frames by a communication route which the flooding of the RPR frames reaches based on the learning results of the MAC addresses.

According to a third aspect of the present invention, there is provided a resilient packet ring (RPR) transmission route designation method as set forth in the second aspect, wherein the first step includes a fourth step of using a control frame passing through each RPR station to calculate a delay time from each RPR station to another RPR station forming the resilient packet ring and a fifth step of automatically setting a remaining time to live (TTL) of the number of RPR stations until a destination so that the cleave point becomes on the route of the section with the longest delay time from each RPR station to the destination RPR station based on the calculated delay times.

According to a fourth aspect of the present invention, there is provided a resilient packet ring (RPR) transmission route designation method in a system including a resilient packet ring connecting a plurality of stations and a control device connected to the resilient packet ring, the RPR transmission route designation method characterized by being provided with a first step of designating a client side port and VLAN and a second step of transmitting packets through a manually designated fixed route for that port and VLAN regardless of a cleave point and bridge function route designation.

According to a fifth aspect of the present invention, there is provided a resilient packet ring (RPR) transmission route designation method as set forth in the fourth aspect, characterized by further including a third step of having each RPR station relaying packets in the resilient packet ring only relay packets addressed to a destination RPR MAC address and a fourth step of having a destination RPR station of the fixed route in the resilient packet ring only drop frames from the resilient packet ring.

According to a sixth aspect of the present invention, there is provided a resilient packet ring (RPR) transmission route designation apparatus in a system including a resilient packet ring connecting a plurality of RPR stations and a control device connected to the resilient packet ring and controlling the plurality of RPR stations and the resilient packet ring, the RPR transmission route designation apparatus
characterized by having a first means for making each RPR station set a cleave point for discarding flooded RPR frames in the case of a bidirectional communication system on a route not desired for use for communication on the resilient packet ring by the control device, a second means for flooding both ringlets of the resilient packet ring with RPR frames to learn the MAC address at each of the RPR stations, and a third means for transmitting received RPR frames by a communication route which the flooding of the RPR frames reaches based on the learned results of the MAC addresses.

According to a seventh aspect of the present invention, there is provided a resilient packet ring (RPR) transmission route designation apparatus in a system including a resilient packet ring connecting a plurality of RPR stations and a control device connected to the resilient packet ring and controlling the plurality of RPR stations and the resilient packet ring, the RPR transmission route designation apparatus characterized by having a first means for making each RPR station automatically set a cleave point for discarding flooded RPR frames in the case of a bidirectional communication system on a communication route with a long delay time until each RPR station by the control device, a second means for flooding both ringlets of the resilient packet ring with RPR frames to learn the MAC address at each of the RPR stations, and a third means for transmitting received RPR frames by a communication route which the flooding of the RPR frames reaches based on the learning results of the MAC addresses.

According to an eighth aspect of the present invention, there is provided a resilient packet ring (RPR) transmission route designation apparatus as set forth in the seventh aspect, wherein the first means includes a fourth means for using a control frame passing through each RPR station to calculate a delay time from each RPR station to another RPR station forming the resilient packet ring and a fifth means for automatically setting a remaining time to live (TTL) of the number of RPR stations until a destination so that the cleave point becomes on the route of the section with the longest delay time from each RPR station to the destination RPR station based on the calculated delay times.

According to a ninth aspect of the present invention, there is provided a resilient packet ring (RPR) transmission route designation apparatus in a system including a resilient packet ring connecting a plurality of stations and a control device connected to the resilient packet ring, the RPR transmission route designation apparatus characterized by being provided with a first means for designating a client side port and VLAN and a second means for transmitting packets through a manually designated fixed route for that port and VLAN regardless of a cleave point and bridge function route designation.

According to a 10th aspect of the present invention, there is provided a resilient packet ring (RPR) transmission route designation apparatus as set forth in the ninth aspect, characterized by further including a third means for making each RPR station relaying packets in the resilient packet ring only relay packets addressed to a destination RPR MAC address and a fourth means for making a destination RPR station of the fixed route in the resilient packet ring only drop frames from the resilient packet ring.

The cleave point for discarding flooded RPR frames in the case of a bidirectional communication system is set on a route not used for communication on the resilient packet ring and the transmission route thereby designated, so it is possible to transmit packets over a route in line with the operating policy of the carrier and possible to transmit packets over the route with the smallest number of hops appropriate for the service of the carrier.

### BRIEF DESCRIPTION OF THE DRAWINGS

These and other objects and features of the present invention will become clearer from the following description of the preferred embodiments given with reference to the attached drawings, wherein:
FIG. 1 is a diagram briefly showing a ring structure of the RPR;
FIG. 2 is a diagram showing the format of a basic data frame exchanged among RPR stations;

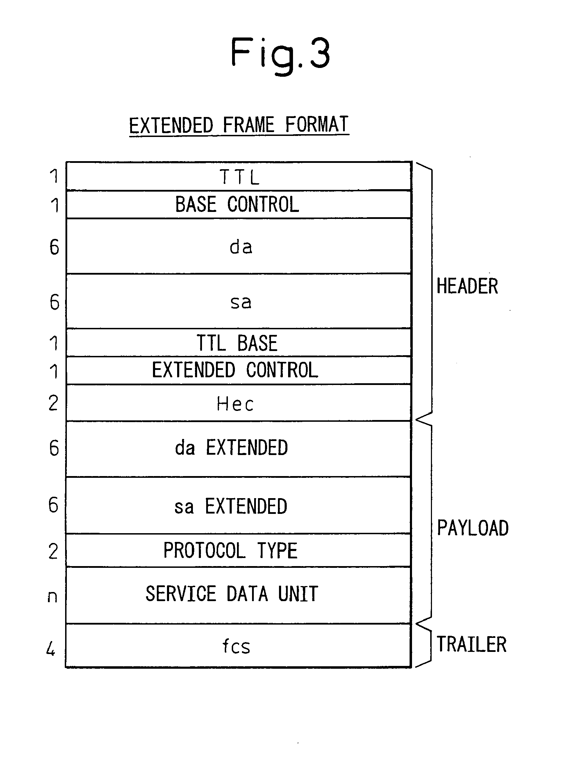

FIG. 3 is a diagram showing an extended data frame format used in the case of relaying an Ethernet® frame of layer 2;
FIG. 4 is a diagram showing the format of a control frame;
FIG. 5 is a diagram showing a topology database constructed from the collected data of the stations;
FIG. 6 is a diagram showing the format of an RPR network for briefly explaining spatial reuse standardized by the IEEE 802.17b;
FIG. 7 is a diagram for briefly explaining the spatial reuse in FIG. 6;
FIG. 8 is a view of the configuration of an RPR system for explaining a first problem;
FIG. 9 is a view of the configuration of an RPR system for explaining a second problem;

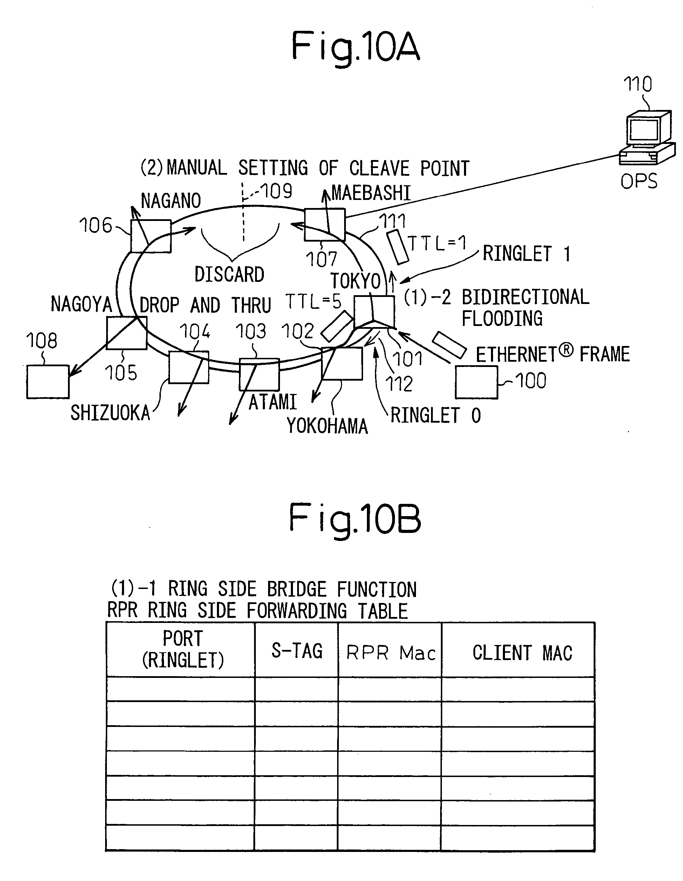

FIG. 10A is a view of the system configuration for explaining a transmission route designation method and apparatus setting a cleave point according to Example 1 of the present invention;
FIG. 10B is a table for explaining a ring side bridge function (function deciding to which of counterclockwise or clockwise ring an input frame should flow over based on the results of learning of the MAC address) provided at each RPR station;

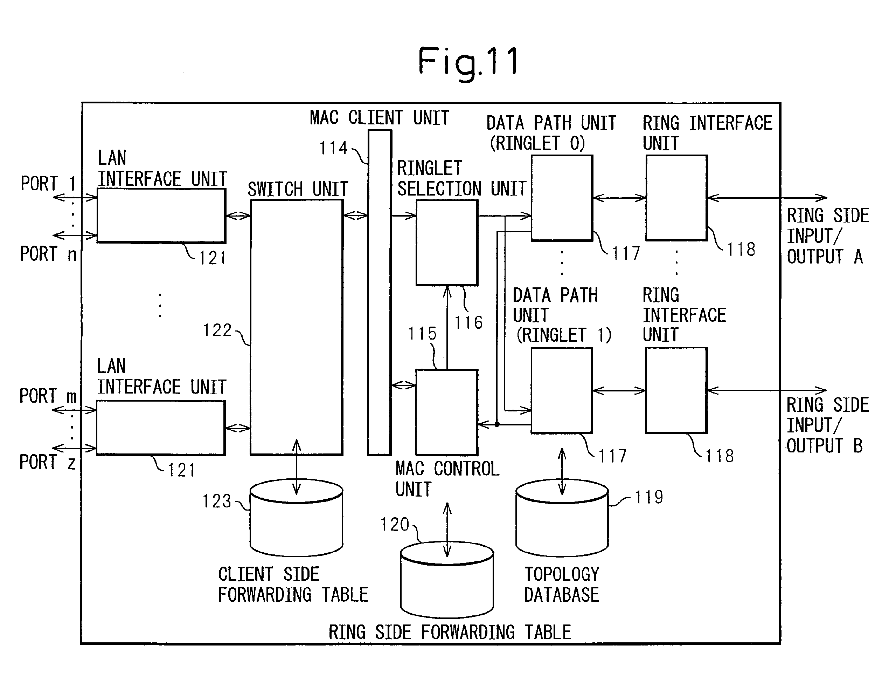

FIG. 11 is a block diagram showing an example of the configuration of each RPR station in FIG. 10A;

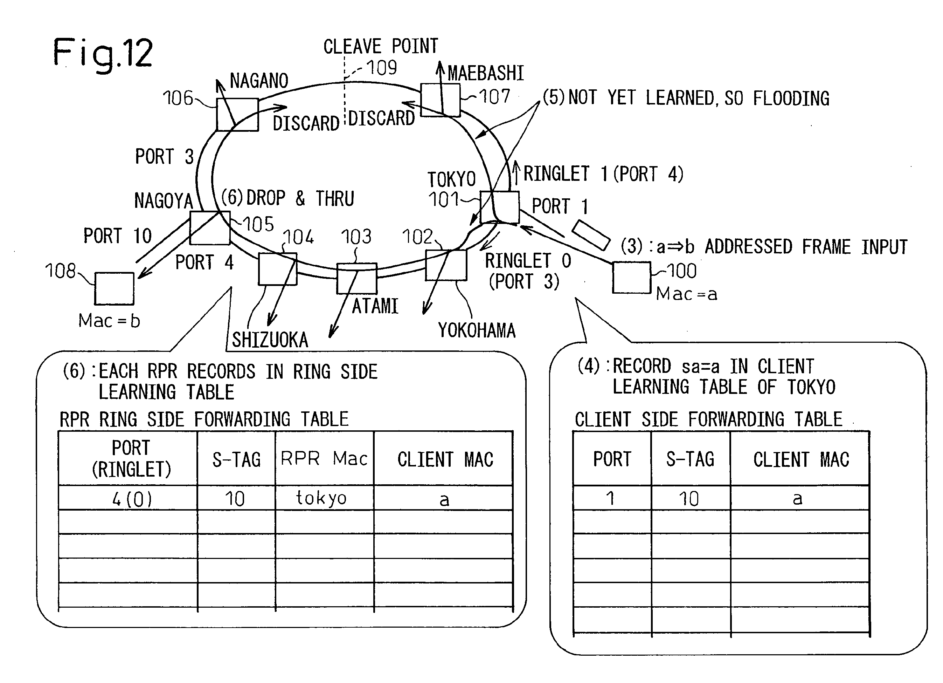

FIG. 12 is a diagram for explaining the state when an Ethernet® frame is transmitted from the Tokyo RPR station 101 to the Nagoya RPR station 105 in the system shown in FIG. 10A;

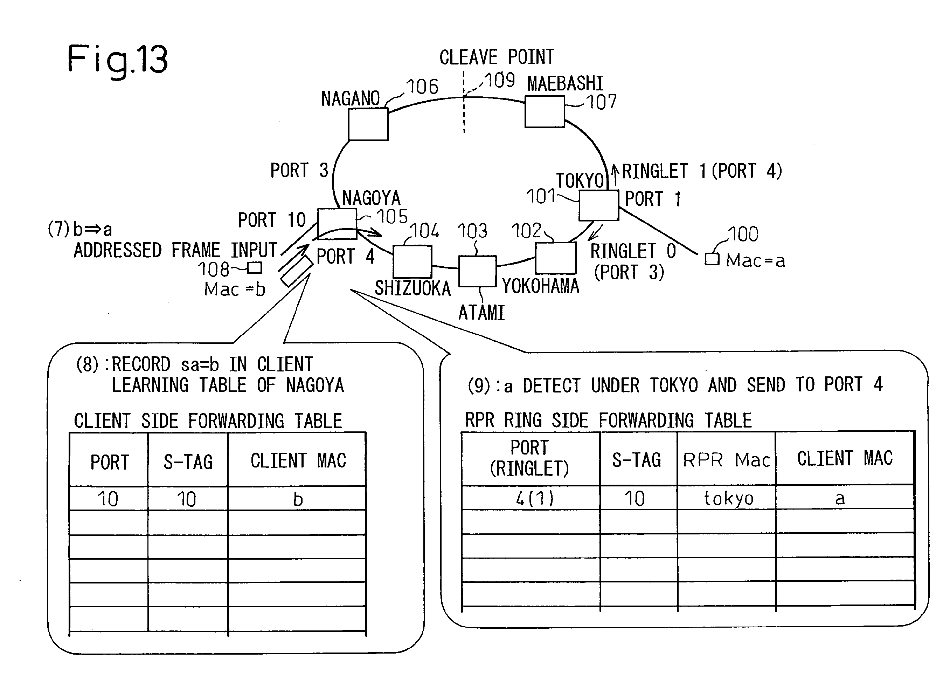

FIG. 13 is a diagram for explaining the state when an Ethernet® frame is transmitted from the Nagoya RPR station 105 to the Tokyo RPR station 101 after the state shown in FIG. 12 in the system shown in FIG. 10A;

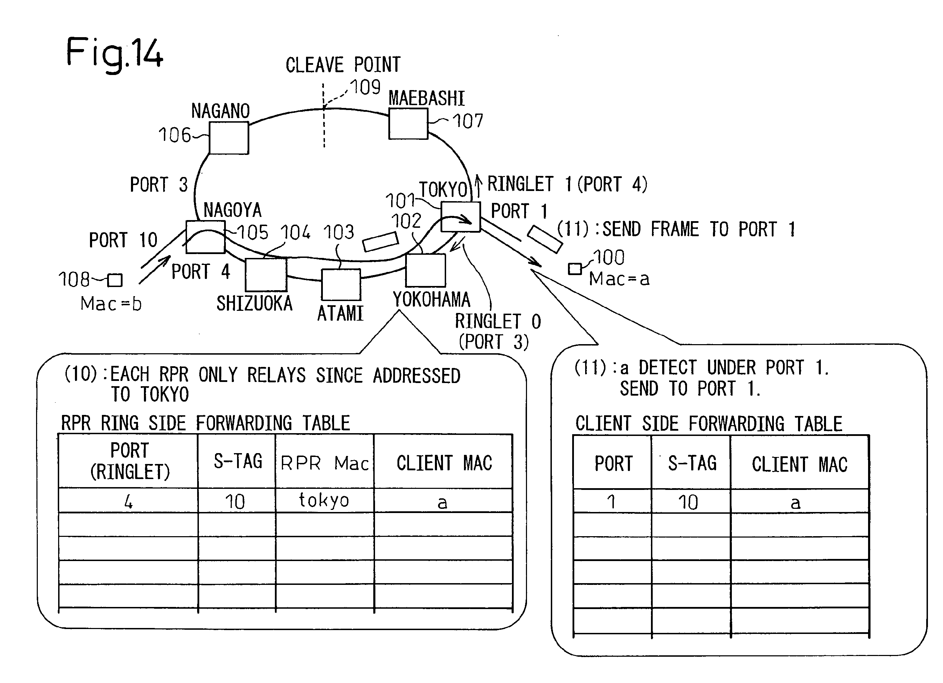

FIG. 14 is a diagram for explaining the state when a frame reaches a client under the Tokyo RPR station 101 after the state shown in FIG. 13;

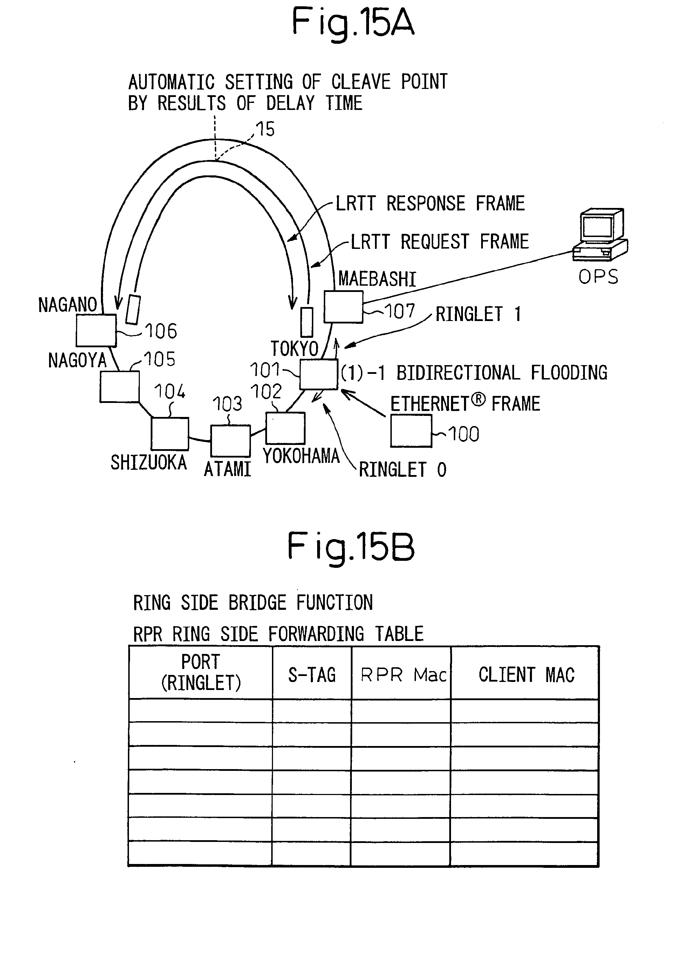

FIG. 15A is a diagram for explaining a transmission route designation method and apparatus for automatically setting a cleave point according to Example 2 of the present invention;
FIG. 15B is a table for explaining a ring side bridge function provided at each RPR station in FIG. 15A;

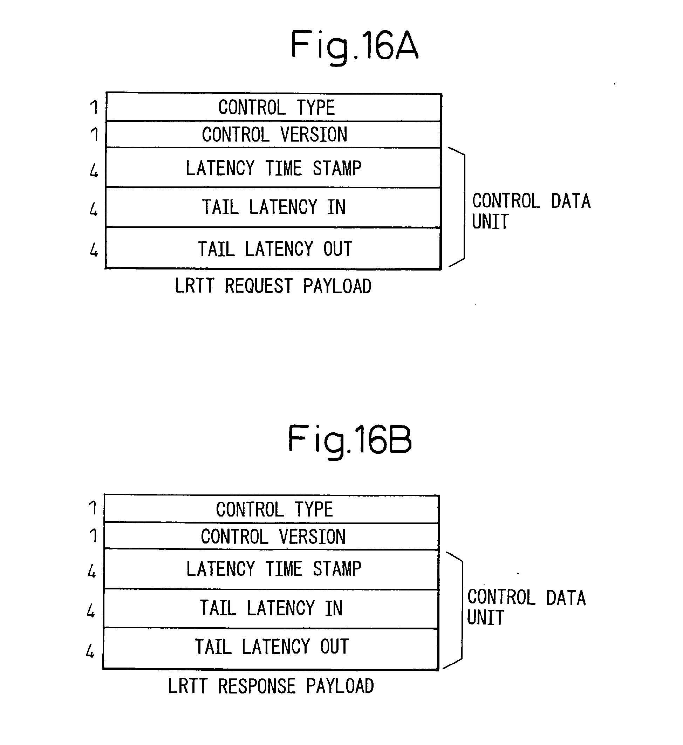

FIG. 16A is a diagram showing the format of a payload of a loop round trip time (LRTT) request frame in FIG. 15A;
FIG. 16B is a diagram showing the format of a payload of a loop round trip time (LRTT) response frame in FIG. 15A;

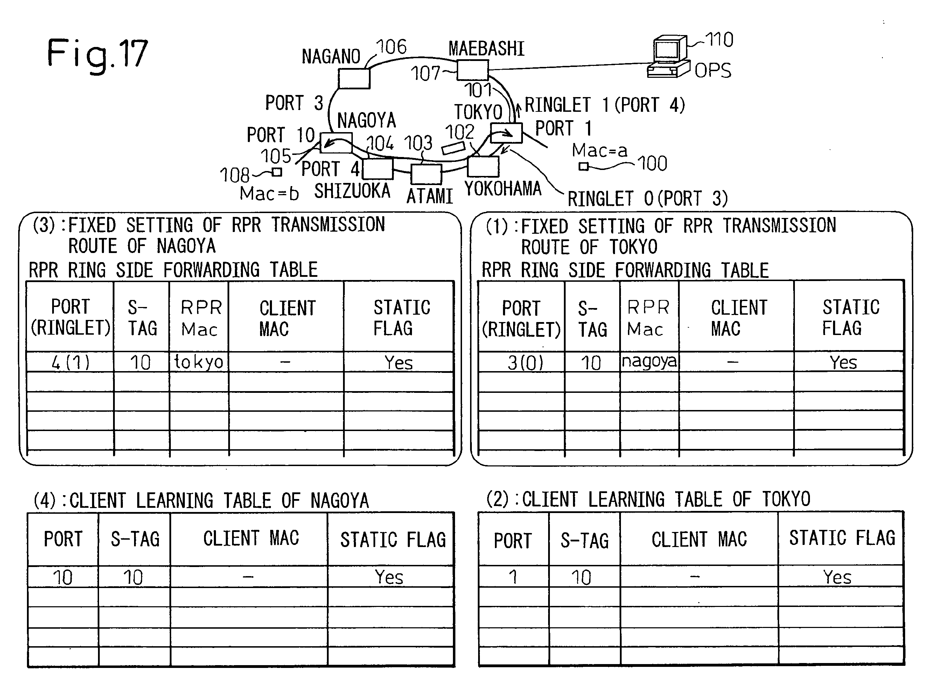

FIG. 17 is a diagram of the system configuration for explaining a transmission route designation method and apparatus for static setting an RPR route according to Example 3 of the present invention;

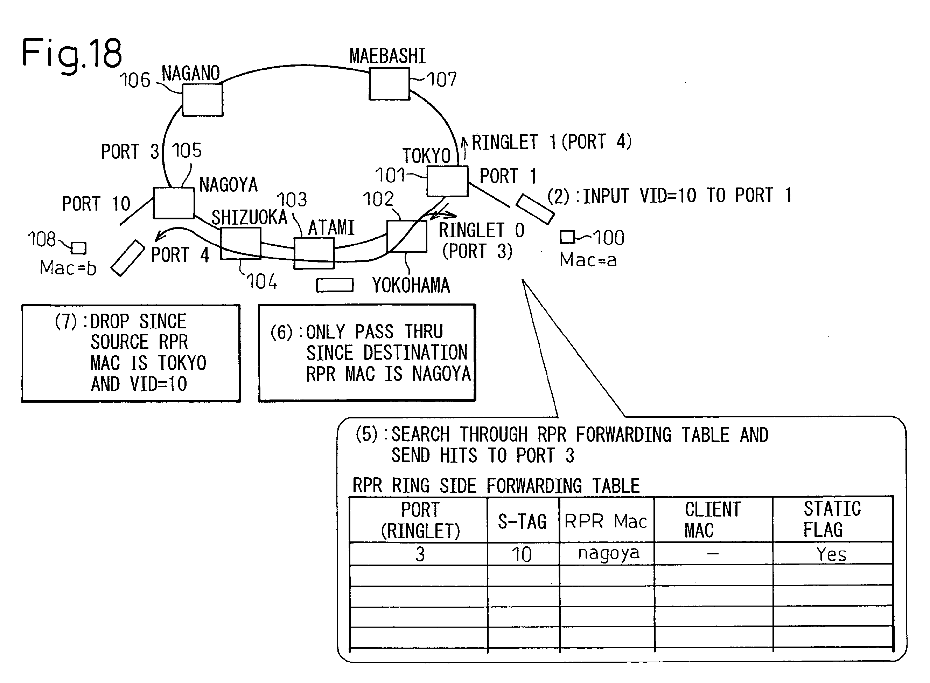

FIG. 18 is a view of the system configuration for explaining a transmission route designation method and apparatus for static setting an RPR route according to Example 3 of the present invention;

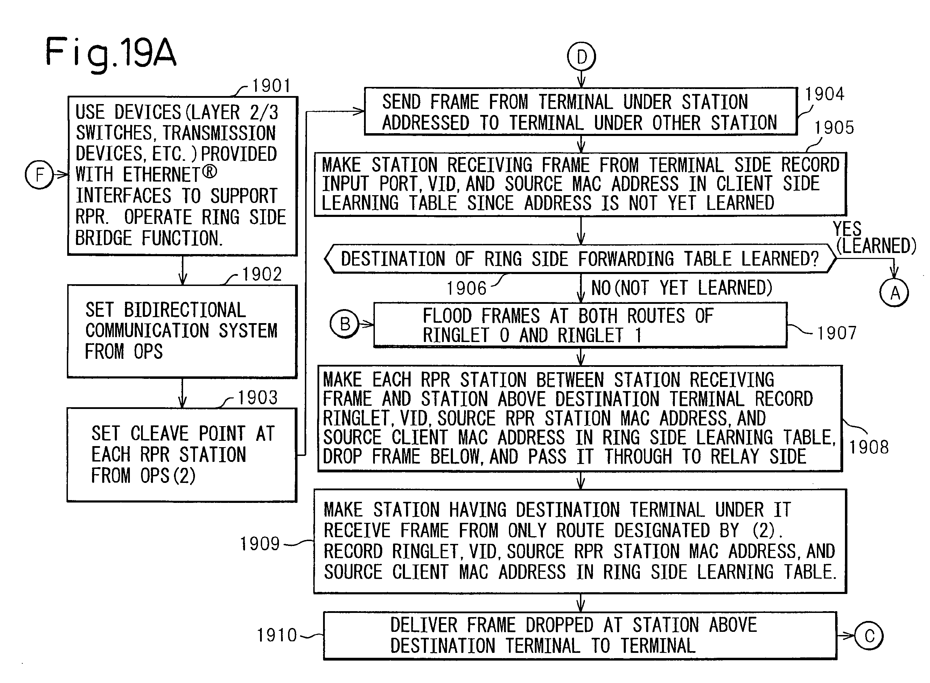

FIG. 19A is part of a flowchart for explaining a transmission route designation method according to all examples of the present invention;

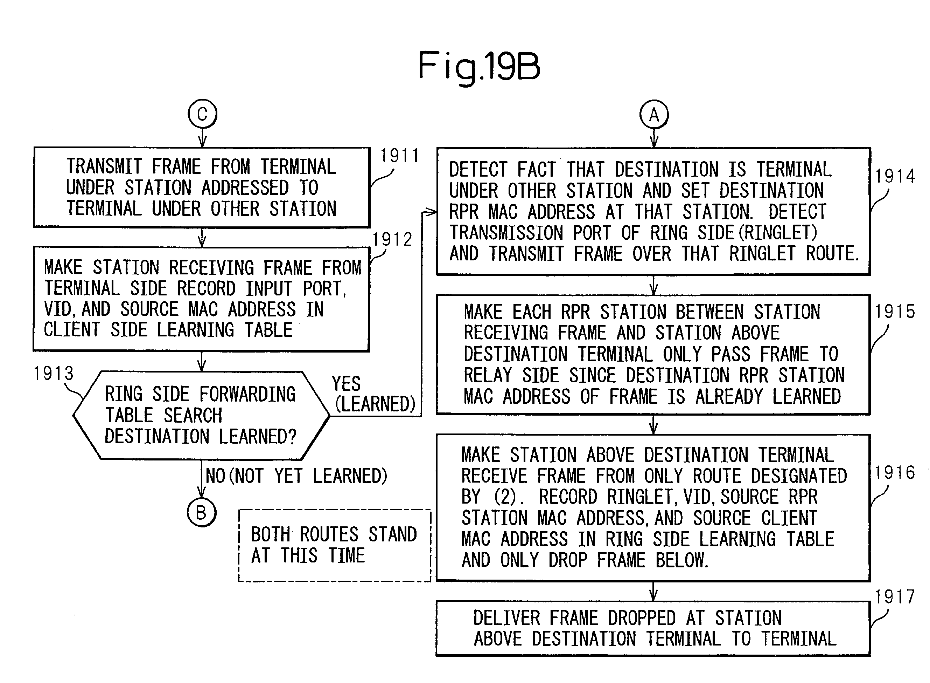

FIG. 19B is another part of the flowchart for explaining a transmission route designation method according to all examples of the present invention;

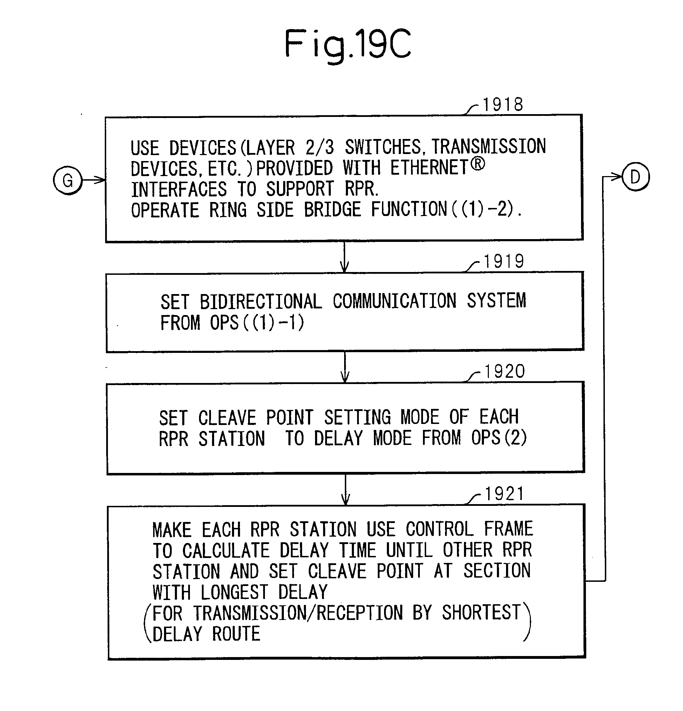

FIG. 19C is part of a flowchart for explaining a transmission route designation method according to Example 2 of the present invention; and

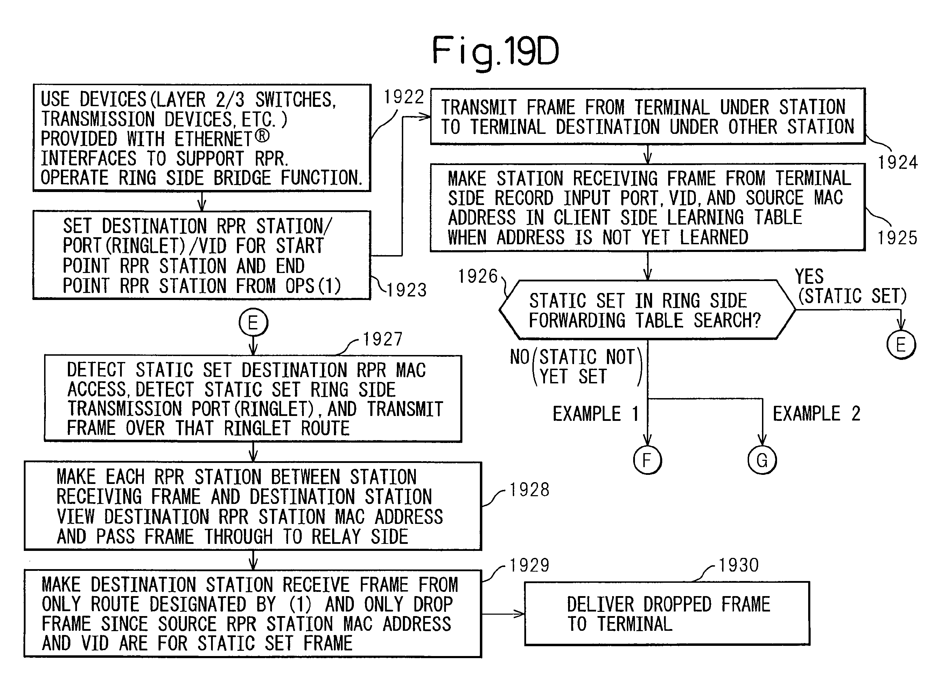

FIG. 19D is part of a flowchart for explaining a transmission route designation method according to Example 3 of the present invention.

### DESCRIPTION OF THE PREFERRED EMBODIMENTS

Below, examples of the present invention will explained by the drawings. In all of the figures, the same reference numerals indicate the same objects. The present invention solves the above problems by devising the following means for a resilient packet ring (RPR, prescribed in IEEE 802.17) supported by devices (layer 2/3 switches, transmission devices, and the like) provided with Ethernet® interfaces in a layer 2/3 network configuration.

### Example 1

FIG. 10A to FIG. 14 are figures for explaining Example 1 of the present invention. FIG. 10A is a view of the system configuration for explaining a transmission route designation method and apparatus setting a cleave point according to Example 1 of the present invention. FIG. 10B is a table for explaining a ring side bridge function (function deciding to which of counterclockwise or clockwise ring an input frame should flow over based on the results of learning of the MAC address) provided at each RPR station.

In FIG. 10A, 100 is a transmission side client terminal, 101 is a Tokyo RPR station, 102 is a Yokohama RPR station, 103 is an Atami RPR station, 104 is a Shizuoka RPR station, 105 is a Nagoya RPR station, 106 is a Nagano RPR station, 107 is a Maebashi RPR station, 108 is a destination client terminal, 109 is a set cleave point, 110 is an operation center controlling the RPR stations, 111 is a resilient packet ring (below, referred to as an "RPR ring"), 112 is a clockwise ringlet 0 of the RPR ring 111, and 113 is a counterclockwise ringlet 1 of the RPR ring 111. The operation center 110 is a control apparatus functioning as a center monitoring the RPR stations.

In this example, a cleave point for discarding RPR frames flooded bidirectionally is set on a route not used for communication on the RPR ring 110 by manual control of the operation center 110.

In FIG. 10B, each RPR station is provided with an RPR ring side forwarding table exhibiting the illustrated ring side bridge function. The table stores the results of learning obtained as a result of receiving frames. It includes a part storing ringlet information relating to which of the ringlet 0 (counterclockwise) or 1 (clockwise) the input port number of the RPR station and the input frame is sent over, a service provider tag (S-tag) including a VLAN ID (below, referred to as "VID") identifier of the end user of the source (corporation or the like), an RPR MAC address of the RPR station of the source, and a MAC address of the source client under the end user.

FIG. 11 is a block diagram showing an example of the configuration of each RPR station in FIG. 10A. In FIG. 11, the ring side of each RPR station is provided with a MAC client unit 114, a MAC control unit 115 interconnected with the MAC client unit 114, a ringlet selection unit 116 connected to the MAC client unit 114, data path units 117 for the ringlet 0 and ringlet 1 with inputs connected to the ringlet selection unit 116 and with outputs connected to the MAC control unit 115, ring side interfaces 118 interconnected with the data path units 117, a topology database 119 storing topology information of the RPR ringlets, and a ring side forwarding table 120 for determining the ring side route. The ring interface units 118 are respectively connected to the ring side input and output ports A and B.

Further, the client side of each RPR station is provided with a plurality of LAN interface units 121 interconnected with a plurality of ports, a single switch unit 122 interconnected with the LAN interface units 121, and a client side forwarding table 123 which determines the port of the client side to be connected to the RPR ring.

Note that the MAC control unit 115 has the functions of a control interface, fairness algorithm, protection, topology management, OAM, and control frame sending and receiving functions; the ringlet selection unit 116 has ringlet selection, flooding selection, and frame format selection functions; and each data path unit 117 has encapsulation/decapsulation, shaping, queuing, stripping, and frame transfer functions.

FIG. 12 is a diagram for explaining the state where an Ethernet® frame is transmitted from the Tokyo RPR station 101 to the Nagoya RPR station 105 in the system shown in FIG. 10A, FIG. 13 is a diagram for explaining the state where an Ethernet® frame is transmitted from the Nagoya RPR station 105 to the Tokyo RPR station 101 after the state shown in FIG. 12 in the system shown in FIG. 10A, and FIG. 14 is a diagram for explaining the state where a frame reaches a client under the Tokyo RPR station 101 after the state shown in FIG. 13.

### Example 2

FIG. 15A is a view of the system configuration for explaining a transmission route designation method and apparatus for automatically setting a cleave point according to Example 2 of the present invention. In the figure, 15 is the automatically set cleave point. FIG. 15B is a table for explaining a ring side bridge function provided at each RPR station in FIG. 15A.

FIG. 16A is a diagram for explaining the format of the payload of a loop round trip time (LRTT) request frame in FIG. 15A.

FIG. 16B is a diagram for explaining the format of the payload of a loop round trip time (LRTT) response frame in FIG. 15A.

### Example 3

FIG. 17 and FIG. 18 are views of the system configurations for explaining transmission route designation methods and apparatuses for setting static configurations of PRP routes according to Example 3 of the present invention. In Example 3, communication is performed using a manually designated route in a fixed (static) manner regardless of the cleave point and bridge function even if the cleave point is set in Example 1 or 2.

FIG. 19A to FIG. 19D are flowcharts for explaining the transmission route designation method according to all of the examples of the present invention. First, the transmission route designation method according to Example 1 of the present invention shown in FIG. 10 to FIG. 14 will be explained. In FIG. 19A, at step 1901, each of the RPR stations 101 to 107 on the ring 111 is provided with devices (layer 2/3 switches, transmission devices, and the like) provided with Ethernet® interfaces with RPR functions. Further, the devices provided at each of the RPR stations 101 to 107 are set in states where the ring-side bridge function is operating ((1)-1 in FIG. 10B). The "bridge function" is the function for making the system learn if the input frame is a frame entering from a port of the ringlet 0 (clockwise) or a frame entering from a port of the ringlet 1 (counterclockwise).

Next, at step 1902, the OPS 110 sets each RPR station to a bi-directional communication system ((1)-2 of FIG. 10A). By this, broadcast frames (including unknown unicast frames) reach the cleave point 109 set in the above way and are discarded there.

Next, a step 1903, the OPS 110 is manually controlled to have each RPR station set the cleave point 109 ((2) of FIG. 10A). This cleave point 109 is set on a route not desired to be used for communication on the RPR ring. In the illustrated example, only the cleave point 109 set by the Tokyo RPR station 101 is shown.

For example, in the Tokyo RPR station 101, for communication from Tokyo to Nagano, when there is a policy that communication using the ringlet 0 is desired, the OPS 110 is manually controlled to set the cleave point 109 between Nagano and Maebashi. Due to this, communication of Tokyo ⇒ Nagano, Tokyo ⇒ Nagoya, Tokyo ⇒ Shizuoka, Tokyo ⇒ Atami, or Tokyo ⇒ Yokohama is performed using the ringlet 0. Further, communication from Tokyo ⇒ Maebashi is performed using the ringlet 1. Specifically, the Tokyo RPR station 101 is notified of the set location of the cleave point 109 from the OPS 100. When encapsulating an Ethernet® frame entering from the client side in an RPR frame, in accordance with the cleave point, TTL is set to 5 when transmitting over the ringlet 0, while TTL is set to 1 when transmitting over the ringlet 1.

Similarly, in the Nagoya RPR station 105, for communication from Nagoya to Tokyo, when there is a policy that communication using ringlet 1 is desired, the OPS 110 is manually controlled to set the cleave point between Nagano and Maebashi. Due to this, communication of Nagoya ⇒ Shizuoka, Nagoya ⇒ Atami, Nagoya ⇒ Yokohama, Nagoya ⇒ Tokyo, or Nagoya ⇒ Maebashi is performed using the ringlet 1. Further, communication from Nagoya ⇒ Nagano is performed using the ringlet 0. Specifically, the Nagoya RPR station 105 is notified of the set location of the cleave point from the OPS 100. When encapsulating an Ethernet® frame entering from the client side in an RPR frame, in accordance with the cleave point, TTL is set to 5 when transmitting over the ringlet 1, while TTL is set to 1 when transmitting over the ringlet 0.

Next, at step S1904, a terminal under each RPR station transmits a frame addressed to a terminal under a separate RPR station. FIG. 12 is a diagram showing a specific example in the case of communication from Tokyo to Nagoya. In FIG. 12, at the Tokyo RPR station 101, an Ethernet® frame is input from the client terminal 100 side toward the Nagoya RPR station 105 ((3) of FIG. 12, frame of MAC = a→ MAC = b).

At this time, at the client side of the Tokyo RPR station 101, the received frame is a not yet learned frame, so at step S1905, the client side estimate table ((4) of FIG. 12) records the input port 1 of the received frame, the VID identifier of the VLAN (corporation or the like) in the S-tag = 10, and the source MAC address sa=a.

Next, at step 1906, the Tokyo RPR station 101 searches through the ring side forwarding learning table to judged if the destination has finished being learned. At the start, the received frame is still not learned, so at step S1907, the received frame is flooded over in both routes of port 3 of the ringlet 0 and port 4 of the ringlet 1 ((5) of FIG. 12).

Next, at step 1908, at the RPR stations 102, 103, 104, 105, and 107 in the ring as well, the received frame is still not learned, so it cannot be determined if the destination client terminal is under them, so the received frame is dropped below them and passed through to the relay side. Further, the ring side forwarding table records the input port and ringlet through which the input frame flowed (1 or 0), the VID identifier of the VLAN of the corporation or the like of the source in the S-tag = 10, the RPR MAC address of the source station (in the figure, to facilitate understanding, described as Tokyo, but in actuality, identifier expressed by alphanumerics), and the client MAC address a of the source. The frame from the ringlet 0 reaching the Nagano RPR station 106 is also dropped and passed through, but the passed frame is discarded at the cleave point 109. Further, the frame from the ringlet 1 reaching the Maebashi RPR station 107 is also dropped and passed through, but the passed frame is discarded at the cleave point 109.

At step 1909, the frame in the ring side forwarding learning table is received at the Nagoya RPR station 105 having the destination terminal under it. Basically, this is the same as step 1908, but at step 1909, the Nagoya RPR station 105 having the destination terminal under it receives frames only over the route designated by the cleave point, in this case, from the ringlet 0. In the same way as at step 1908, the ring side forwarding table records the input port 4 and ringlet 0, the VID identifier of the VLAN of the corporation or the like of the source in the S-tag = 10, the RPR MAC address of the source station, and the client MAC address a of the source.

In this way, at step 1910, the frame finally dropped at the Nagoya RPR station 105 is delivered to the destination client terminal 108 having the MAC address = b ((6) of FIG. 12).

By the processing of step 1907 to step 1910, the RPR ring side forwarding table in all RPR stations between the Tokyo RPR station 101 and the Nagoya RPR station 105 learns the RPR MAC address of the source station and the MAC address a of the source client.

Next, at step 1911 to 1913 of FIG. 19B, the same operation as step 1904 to step 1906 is performed at the Nagoya RPR station 105. At the Nagoya RPR station 105, a client side learning table as shown in (4) of FIG. 12 is repeated. If the ring side forwarding table is not yet learned, the same operation as steps 1908 to 1910 is repeated whereby the ring side forwarding table records content of the same format as shown in (6) of FIG. 12.

At steps 1906 and 1913, if the ring side forwarding table has already recorded the destination client MAC address, the routine proceeds to step 1914 where, for example, a communication route is established between a client 108 under the Nagoya RPR station 105 and a client 100 under the Tokyo RPR station 101 by an Ethernet® frame addressed from the client 108 under the Nagoya RPR station 105 to the client 100 under the Tokyo RPR station 101 (frame of MAC = b → MAC = a) being input to the Nagoya RPR station 105. At this time, at the Nagoya RPR station 105, the received frame is not yet learned, so the client side learning table records the input port 10, VID = 10, and the source MAC address sa = b ((8) of FIG. 13).

Further, at the Nagoya RPR station 105, since the destination address a in the received frame matches with the learned source client MAC address a in the RPR forwarding table, the fact that the destination is the client terminal 100 under the Tokyo RPR station 101 is detected, the ring side transmission port 4 and ringlet 1 are detected, the fact that the VID in the S-tag is 10 and the destination RPR station is Tokyo is detected, and the ring side forwarding table records these values ((9) of FIG. 13). Further, the frame is transmitted over the route of the ringlet 1.

Next, at step 1915 as well, since the destination address a in the received frame matches with the learned source client MAC address a in the RPR forwarding table, the fact that the destination is the client terminal 100 under the Tokyo RPR station 101 is detected, the ring side transmission port 4 and ringlet 1 are detected, the fact that the VID in the S-tag is 10 and the destination RPR station is Tokyo is detected, and the ring side forwarding table records these values ((10) of FIG. 14). Further, the frame is transmitted over the route of the ringlet 1.

Next, at step 1916, the Tokyo RPR station 101, since designating the cleave point 109, receives a frame from Nagoya only over the route of the ringlet 1. At the Tokyo RPR station 101 as well, like the other RPR stations, the ring side forwarding table records the reception port number and reception ringlet, the VID in the S-tag, the source MAC address, and the source client address. Furthermore, the station compares the client side learning table and destination MAC address of the received frame. The result is that the destination MAC address of the received frame is its own RPR station address, so the station only performs drop processing ((11) of FIG. 14).

In this way, at step 1917, the frame dropped at the Tokyo RPR station 101, which is the station above the destination client terminal 100, is delivered to the destination client terminal 100.

FIG. 19C is a flowchart for explaining the transmission route designation method according to Example 2 of the present invention. In this example, steps 1918 and 1919 are the same as steps 1901 and 1902 in Example 1, so here their explanations are omitted.

In Example 2, at step 1920, the mode of setting the cleave point in each RPR station by the OPS 110 (FIG. 15A) is set to the delay mode.

Next, at step 1921, each RPR station uses a control frame to calculate the delay time to the other RPR stations forming the ring. Each RPR station uses the calculated delay time to automatically set the TTL so that the section with the longest delay from each RPR station becomes the cleave point.

The setting of the cleave point by the delay mode in the Tokyo RPR station 101 will be described below as an example. The delay time is measured using a loop round trip time (LRTT) frame - one of the control frames.

FIG. 16A is a diagram showing the request payload of an LRTT frame, while FIG. 16B is a diagram showing the response payload of an LRTT frame.

The Tokyo RPR station 101 uses an LRTT frame to measure the delay time with respect to each RPR station in the ring for both the ringlet 0 and ringlet 1.

As a result of the measurement, when the delay time of Tokyo ⇒ Nagano is longest, the route of the ringlet 0 takes 450 µs, and the route of the ringlet 1 takes 500 µs, the cleave point is set between the longest delay Nagano and Maebashi. Due to this, communication of Tokyo ⇒ Nagano, Tokyo ⇒ Nagoya, Tokyo ⇒ Shizuoka, Tokyo ⇒ Atami, or Tokyo ⇒ Yokohama is performed using the short delay time ringlet 0. Further, communication of Tokyo ⇒ Maebashi is also similarly performed using the short delay time ringlet 1. Specifically, when joining an Ethernet® frame entering from the client side at Tokyo in the RPR frame, TTL is set to 5 when transmitting over the ringlet 0 and TTL is set to 1 when transmitting over the ringlet 1.

Similarly, if using the Nagoya RPR station 105 as an example, the cleave point is set between Nagano and Maebashi found to have the longest delay time as a result of the measurement of the delay time. Due to this, communication of Nagoya ⇒ Shizuoka, Nagoya ⇒ Atami, Nagoya ⇒ Yokohama, Nagoya ⇒ Tokyo, or Nagoya ⇒ Maebashi is performed using the short delay time ringlet 1. Further, communication of Nagoya ⇒ Nagano is also similarly performed using the short delay time ringlet 0. Specifically, when joining an Ethernet® frame entering from the client side at Nagoya in the RPR frame, TTL is set to 5 when transmitting over the ringlet 1 and TTL is set to 1 when transmitting over the ringlet 0.

After step 1921, the same operation is performed as in steps 1904 to 1910 shown in FIG. 19A. Due to this, the service can be provided with a short delay.

FIG. 19D is a flowchart for explaining the transmission route designation method according to Example 3 of the present invention. In this example, at step 1922, in the same way as Examples 1 and 2, each of the RPR stations 101 to 107 on the ring 111 is provided with devices (layer 2/3 switches, transmission devices, and the like) provided with Ethernet® interfaces, but unlike Examples 1 and 2, there is no need to set a state where the ring side bridge function operates.

Next, at step 1923, the RPR forwarding tables of the starting point RPR station and the end point RPR station are set from the OPS 110 with the transmission and reception ports and ringlets, the identifier VID of the VLAN included in the S-tag used for transmission and reception, the MAC addresses of the RPR station of the transmission source and destination, and the static flag. In the case of static communication, the communicating RPR station is set by the OPS 110, so the MAC address of the client terminal does not have to be set.

Further, the client side learning table is set with the transmission and receiving ports, the identifier VID of the VLAN included in the S-tag used for transmission and reception, and the static flag.

In the example shown in FIG. 17, the example is shown of fixed communication addressed from the Tokyo RPR station 101 to the Nagoya RPR station 105. In the illustrated example, the RPR ring side forwarding table of the Tokyo RPR station 101 is set with the port 3 and ringlet 0 as the transmission route, the VID identifier of the VLAN included in the S-tag = 10, the MAC address of the destination RPR station (Nagoya), the MAC address of the destination client, and the static flag showing if the communication is static communication ((1) of FIG. 17). Further, the client side learning table is set with the static flag showing whether or not the communication is static communication (yes) ((2) of FIG. 17).

Further, the RPR ring side forwarding table of the Nagoya RPR station 105 is set with the port 4 and ringlet 1 as the transmission route, the VID identifier of the VLAN included in the S-tag = 10, the MAC address of the destination RPR station (Tokyo), the MAC address of the destination client, and the static flag showing if the communication is static communication ((3) of FIG. 17). The client side learning table is set with the static flag showing whether or not the communication is static communication (yes)((4) of FIG. 17).

Next, at step 1924, an Ethernet frame of VID=10 is transmitted from one terminal (client terminal 100 in the illustrated example) under the source RPR station (the Tokyo RPR station 101 in the illustrated example) addressed to the client terminal (client terminal 108 in the illustrated example) of the transmission destination RPR station 105 (the Nagoya RPR station 105 in the illustrated example) 105.

At step 1925, the RPR station receiving the frame records the input port, the VID, and the source MAC address in the client side learning table when the address is not yet learned. In the illustrated example, when the Tokyo RPR station 101 receives a frame from the client terminal 100, it records the input port 1, VID 10, and the source MAC address.

Next, at step 1926, the ring side forwarding table of the source RPR station is searched to search if the static flag has been set. In the illustrated example, the ring side forwarding table of the Tokyo RPR station 101 is searched and the fact that the received frame is a statically set frame is detected.

Further, at step 1927, the fact that the statically set destination RPR MAC address is Nagoya is detected and the fact that the statically set ring side transmission port (ringlet) is 3 (0) is detected. Since the frame is for the port 1 of the ringlet 0 and the VID = 10, the frame addressed to Nagoya is transmitted over the ringlet 0 of this port 3 ((5) of FIG. 18).

At step 1928, each RPR station between the Tokyo RPR station 101 receiving the frame from the client terminal 100 and the destination RPR station, that is, the Nagoya RPR station 105, only passes the frame through to the relay side since the MAC address of the destination RPR station is not its own MAC address ((6) of FIG. 18).

At step 1929, the destination RPR station, that is, the Nagoya RPR station 105, compares the source RPR MAC address and VID in the received frame against the source RPR MAC address and VID recorded in the RPR ring side forwarding table. Since they match, it only drops the received frame ((7) of FIG. 18). In this way, at step 1930, the dropped frame is delivered to the destination client terminal 108.

The same is true for static transmission of the Nagoya ⇒ Tokyo direction. Note that the static setting can be performed together with the setting of the cleave point manually explained in Example 1 or the setting of the cleave point by the delay time as explained in Example 2. Due to this, just the VID of a certain user (or service) can be statically set regardless of the route set manually or by delay, so it is possible to construct a flexible system.

Further, at the time of a fault, the cleave point set manually or by delay is moved to the fault position as prescribed in the IEEE 802.17, so the static setting becomes just a switching operation.

As explained above, the present invention provides a system in line with management of operations by the carrier by designating transmission routes of a resilient packet ring (RPR, prescribed in IEEE 802.17) supported by devices (layer 2/3 switches, transmission devices, and the like) provided with Ethernet® interfaces used in a layer 2/3 network for which carriers are developing services and thereby enables realization of Ethernet® services superior in reliably and economy in terms of functions and management of operations.

While the invention has been described with reference to specific embodiments chosen for purpose of illustration, it should be apparent that numerous modifications could be made thereto by those skilled in the art without departing from the basic concept and scope of the invention.

## Claims

1. A resilient packet ring (RPR) transmission route designation method in a system including a resilient packet ring connecting a plurality of RPR stations and a control device connected to the resilient packet ring and controlling said plurality of RPR stations and said resilient packet ring,
said RPR transmission route designation method **characterized by** having
a first step of having each RPR station set a cleave point for discarding flooded RPR frames in the case of a bidirectional communication system on a route not desired for use for communication on said resilient packet ring by said control device,
a second step of flooding both ringlets of said resilient packet ring with RPR frames to learn the MAC address at each of said RPR stations, and
a third step of transmitting received RPR frames by a communication route which the flooding of said RPR frames reaches based on the learned results of said MAC addresses.

2. A resilient packet ring (RPR) transmission route designation method in a system including a resilient packet ring connecting a plurality of RPR stations and a control device connected to the resilient packet ring and controlling said plurality of RPR stations and said resilient packet ring,
said RPR transmission route designation method **characterized by** having
a first step of having each RPR station automatically set a cleave point for discarding flooded RPR frames in the case of a bidirectional communication system on a communication route with a long delay time until each RPR station by said control device,
a second step of flooding both ringlets of said resilient packet ring with RPR frames to learn the MAC address at each of said RPR stations, and
a third step of transmitting received RPR frames by a communication route which the flooding of said RPR frames reaches based on the learning results of said MAC addresses.

3. A resilient packet ring (RPR) transmission route designation method as set forth in claim 2, wherein said first step includes
a fourth step of using a control frame passing through each said RPR station to calculate a delay time from each said RPR station to another RPR station forming said resilient packet ring and
a fifth step of automatically setting a remaining time to live (TTL) of the number of RPR stations until a destination so that said cleave point becomes on the route of the section with the longest delay time from each RPR station to the destination RPR station based on the calculated delay times.

4. A resilient packet ring (RPR) transmission route designation method in a system including a resilient packet ring connecting a plurality of stations and a control device connected to the resilient packet ring,
said RPR transmission route designation method **characterized by** being provided with
a first step of designating a client side port and VLAN and
a second step of transmitting packets through a manually designated fixed route for that port and VLAN regardless of a cleave point and bridge function route designation.

5. A resilient packet ring (RPR) transmission route designation method as set forth in claim 4, **characterized by** further including
a third step of having each RPR station relaying packets in said resilient packet ring only relay packets addressed to a destination RPR MAC address and
a fourth step of having a destination RPR station of said fixed route in said resilient packet ring only drop frames from said resilient packet ring.

6. A resilient packet ring (RPR) transmission route designation apparatus in a system including a resilient packet ring connecting a plurality of RPR stations and a control device connected to the resilient packet ring and controlling said plurality of RPR stations and said resilient packet ring,
said RPR transmission route designation apparatus **characterized by** having
a first means for making each RPR station set a cleave point for discarding flooded RPR frames in the case of a bidirectional communication system on a route not desired for use for communication on said resilient packet ring by said control device,
a second means for flooding both ringlets of said resilient packet ring with RPR frames to learn the MAC address at each of said RPR stations, and
a third means for transmitting received RPR frames by a communication route which the flooding of said RPR frames reaches based on the learned results of said MAC addresses.

7. A resilient packet ring (RPR) transmission route designation apparatus in a system including a resilient packet ring connecting a plurality of RPR stations and a control device connected to the resilient packet ring and controlling said plurality of RPR stations and said resilient packet ring,
said RPR transmission route designation apparatus **characterized by** having
a first means for making each RPR station automatically set a cleave point for discarding flooded RPR frames in the case of a bidirectional communication system on a communication route with a long delay time until each RPR station by said control device,
a second means for flooding both ringlets of said resilient packet ring with RPR frames to learn the MAC address at each of said RPR stations, and
a third means for transmitting received RPR frames by a communication route which the flooding of said RPR frames reaches based on the learning results of said MAC addresses.

8. A resilient packet ring (RPR) transmission route designation apparatus as set forth in claim 7, wherein said first means includes
a fourth means for using a control frame passing through each said RPR station to calculate a delay time from each said RPR station to another RPR station forming said resilient packet ring and
a fifth means for automatically setting a remaining time to live (TTL) of the number of RPR stations until a destination so that said cleave point becomes on the route of the section with the longest delay time from each RPR station to the destination RPR station based on the calculated delay times.

9. A resilient packet ring (RPR) transmission route designation apparatus in a system including a resilient packet ring connecting a plurality of stations and a control device connected to the resilient packet ring,
said RPR transmission route designation apparatus **characterized by** being provided with
a first means for designating a client side port and VLAN and
a second means for transmitting packets through a manually designated fixed route for that port and VLAN regardless of a cleave point and bridge function route designation.

10. A resilient packet ring (RPR) transmission route designation apparatus as set forth in claim 9, **characterized by** further including
a third means for making each RPR station relaying packets in said resilient packet ring only relay packets addressed to a destination RPR MAC address and
a fourth means for making a destination RPR station of said fixed route in said resilient packet ring only drop frames from said resilient packet ring.
